# EUROPEAN PATENT APPLICATION

(11) **EP 2 302 868 A1**
(43) Date of publication of application: **30.03.2011**
(21) Application number: 09305909.5
(22) Date of filing: 29.09.2009
(51) Int. Cl.: H04L 29/06

(54) **Dynamic call deflection**

(71) Applicant: Alcatel Lucent, 75008 Paris (FR)
(72) Inventor: Thomas, Sony, 600050 Chennai (IN); Seshadri, Veera Raghavan, 600044 Chennai (IN)
(74) Representative: Nicolle, Olivier

(57) **Abstract**

The present invention relates to telecommunication networks and, more particularly, to deflecting calls in telecommunication networks. A method, communication terminal and network for a called user to deflect a call from a calling user to a second communication terminal dynamically in Session Initiation Protocol (SIP) networks, the method comprising steps of the called user entering number of the second communication terminal using a first communication terminal during the alert phase of the call. The called user may also know the status of the deflected call, wherein the status indicates if the dynamic deflection is successful or a failure. The called user can also try deflecting the call to a different number if the deflection failed, wherein the called user can retry multiple times to deflect the call. The called user can also answer the call if the deflection failed.

## Description

### TECHNICAL FIELD

The present invention relates to telecommunication networks and, more particularly, to deflecting calls in telecommunication networks.

### BACKGROUND

Call deflection is a service in which the called user can choose to deflect the call to a third party during the alert phase of the call without answering the calling user. In Integrated Services Digital Network (ISDN) systems, calls can be deflected depending on the calling user's number as long as call forwarding or divert limits have not been met. Calls may be deflected by the network if the called user does not reply or if the user wants calls from a particular number to be deflected unconditionally. The user has to register the number of the calling user whose calls have to be deflected unconditionally.

The user also has to register the number to which the call has to be deflected. When a call is deflected, a new call request will be sent to the registered number. The user does not have the option of dynamically deciding the number to which the call has to be deflected. Also, once a call has been deflected, the user will not be able to determine if the deflection has been successful or not. In case of an unsuccessful deflection, the user will not be able to retry deflecting the call to a different number. Also, if the call has not been deflected successfully, then the user may not be able to answer the call.

### SUMMARY

In view of the foregoing, an embodiment herein provides a method for a called user to deflect a call from a calling user to a second communication terminal dynamically in Session Initiation Protocol (SIP) networks, the method comprising steps of the called user entering number of the second communication terminal using a first communication terminal during the alert phase of the call. The first communication terminal sends the number to network of the called user and the network initiates a second session to the second communication terminal. A session established between the network and the first communication terminal is released and then the second session is established between the network and the second communication terminal. The second session may be established between the network and the second communication terminal and then the session established between the network and the first communication terminal is released. The network sends the status of the deflected call to the called user, wherein the status indicates if the dynamic deflection is successful or a failure. The called user can try deflecting the call to a different number if the deflection failed, wherein the called user can retry multiple times to deflect the call. The called user can answer the call if the deflection failed. The called user subscribes to the service of deflecting calls dynamically and the network checks to determine if the called user has subscribed to the service of deflecting calls dynamically during the alert phase of the call before deflecting the call.

Embodiments further disclose a communication terminal for deflecting a call dynamically in Session Initiation Protocol (SIP) networks, the communication terminal comprising atleast one means adapted for enabling a called user to dynamically enter number of the second communication terminal during alert phase of the call and sending a response dynamically to a network, wherein the number of the third user is included in the response. The communication terminal is adapted to receive a message indicating the status of the deflected call, wherein the status indicates if the dynamic deflection is successful or a failure, try atleast once to deflect the call to a different number if said deflection failed or answer the call if said deflection failed.

Embodiments herein also disclose a network for enabling a called user to deflect a call from a calling user to a second communication terminal dynamically in Session Initiation Protocol (SIP) networks, the network comprising atleast one means adapted for enabling the called user to enter number of the second communication terminal using a first communication terminal during the alert phase of the call. The network receives a response from the called user, wherein the response indicates that the call is to be deflected and the number of the second communication terminal is included in the response and the network initiates a second session to the second communication terminal. The network is adapted to release the session established between the network and the first communication terminal and then the second session is established between the network and the second communication terminal. The network is adapted to establish the second session between the network and the second communication terminal and then the session established between the network and the first communication terminal is released. The network is adapted to send the status of the deflected call to the called user, wherein the status indicates if the dynamic deflection is successful or a failure, receive multiple said responses if said status indicates that said deflection was a failure and receive a answer response from said called user if said status indicates that said deflection was a failure.

These and other aspects of the embodiments herein will be better appreciated and understood when considered in conjunction with the following description and the accompanying drawings.

### BRIEF DESCRIPTION OF THE FIGURES

The embodiments herein will be better understood from the following detailed description with reference to the drawings, in which:

FIG. 1 illustrates a block diagram of a SIP network, according to an embodiment herein;

FIG. 2 illustrates a block diagram of a softswitch, according to an embodiment herein;

FIG. 3 illustrates a block diagram of a communication terminal, according to an embodiment herein;

FIG. 4 illustrates a block diagram of a communication terminal displaying the option to deflect a call, according to an embodiment herein;

FIG. 5 is a flowchart depicting a method for deflecting calls dynamically, according to an embodiment herein;

FIG. 6 illustrates a flow diagram of dynamic call deflection using early release of the session between network and first communication terminal before invoking call deflection by softswitch, according to an embodiment herein;

FIG. 7 illustrates a flow diagram of dynamic call deflection using late release of the existing session between network and first communication terminal after call deflection has been successful, according to an embodiment herein;

FIG. 8 illustrates a flow diagram of dynamic call deflection using late release of the existing session between network and first communication terminal, with retry option and call deflection has been unsuccessful, according to an embodiment herein; and

FIG. 9 illustrates a flow diagram of dynamic call deflection using late release, with answer option after unsuccessful call deflection, according to an embodiment herein;

### DETAILED DESCRIPTION OF EMBODIMENTS

The embodiments herein and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

The embodiments herein achieve dynamic call deflection by allowing the called user to deflect calls during the ringing phase of the call. The called user can dynamically determine the number for deflecting the call and may also know the status of the deflected call. The status of the deflected call would help the called user determine if the deflection was successful or a failure, and retry forwarding the call to same/another user or accept the call himself. Referring now to the drawings, and more particularly to FIG'S. 1 through 9, where similar reference characters denote corresponding features consistently throughout the figures, there are shown embodiments.

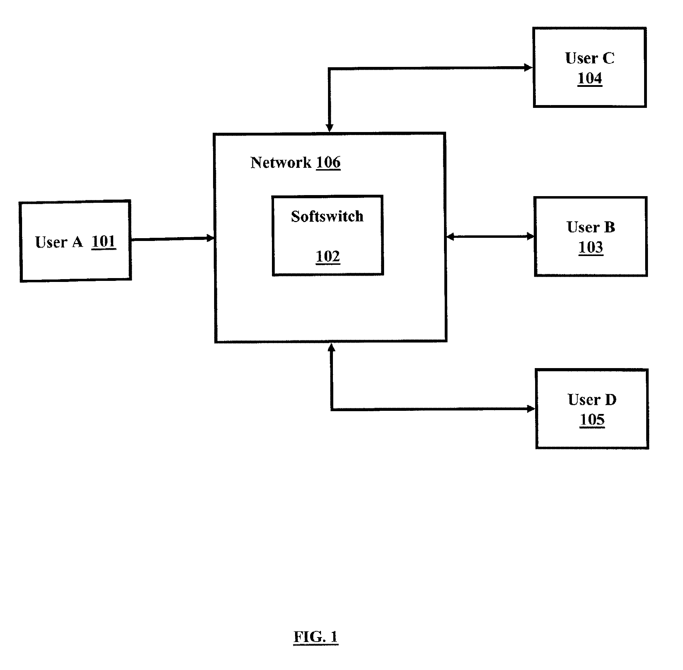

FIG. 1 illustrates a block diagram of a SIP network. A softswitch 102 in a communication network 106 connects calls from a calling user to the called user. The softswitch 102 controls connections at the junction point between circuit switched networks and packet switched networks. The softswitch directs a call request from the calling user to the called user. When the called user responds to the call request, the softswitch relays the response to the called user. User A 101 is a calling user and user B 103 is the called user. When user A 101 needs to communicate with user B 103, user A 101 sends a call request to user B 103 through the softswitch 102. User A may send the call request using a communication terminal. When the softswitch 102 receives the call request, the softswitch sends the request to user B 103 and the communication terminal of user B 103 would alert user B 103. User B 103 may deflect the call dynamically to user C 104. To avail of the facility to deflect calls dynamically, a user subscribes to the service of deflecting calls dynamically. User B 103 can dynamically determine the number for deflecting the call. Once user B 103 deflects the call, user B 103 may also be able to know the status of the deflected call. If the call deflection was unsuccessful, then the reason for the failure would be conveyed to user B 103 and user B 103 can also deflect the call to a different user. If deflection fails, user B 103 may retry multiple times for deflecting the call. For example, a SIP (Session Initiation Protocol) network may be a network 106 having VoIP (Voice over Internet Protocol) in an IMS (IP Multimedia Subsystem) network using SIP. User A 101 may send a call request to user B 103 through the softswitch 102. If user B 103 is in a meeting and is unable to answer the call, then user B 103 can deflect the call to user C 104. User B dynamically enters the number of user C 104 and sends the number in a response to the softswitch 102.

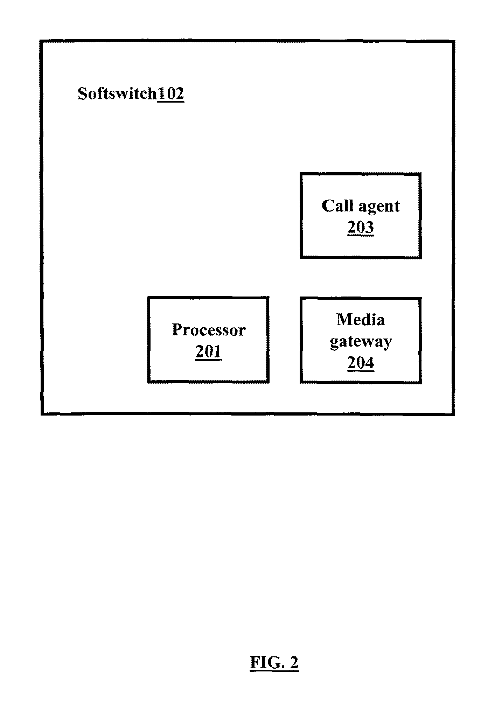

FIG. 2 illustrates a block diagram of a softswitch. A softswitch 102 in a communication network 106 connects calls from user A 101 to user B 103. The softswitch 102 controls connections at the junction point between circuit switched networks and packet switched networks. The softswitch relays a call request from user A 101 to user B 103. A call agent 203 performs various functions of the softswitch 102. The functions may include billing, call routing, signalling and call services. The call agent 203 may control several different media gateways in geographically dispersed areas using a TCP/IP link. A media gateway 204 connects different types of digital media streams together to create an end-to-end path for the media in the call. The media may include voice and data. The media gateway 204 acts as an interface between different types of networks. A processor 201 controls the functioning of the softswitch 102. The processor 201 controls the functioning of the call agent 203 and the media gateway 204. When user A 101 wants to communicate with user B 103, user A 101 sends a call request to user B 103 through the softswitch 102, using a communication terminal. The softswitch directs the call request from user A 101 to user B 103. When user B 103 responds to the call request using a communication terminal, the softswitch relays the response to user A 101. If user B 103 deflects the call, then user B would also send the number, to which the call is deflected, in the response. The processor 201 processes the response and determines if the call has to be deflected. If the call has to be deflected, then the processor 201 extracts the number for deflecting the call from the received response. The processor 201 then sends a cancel request to user B 103, to cancel the call request sent to user B 103. The processor 201 sends a call request to the number mentioned in the response sent by user B 103. For example, the call may be deflected to user C 104. The request is sent to start a communication session between user A 101 and user C 104. On receiving the request, user C 104 sends a response to the request to the softswitch 102. The processor 201 processes the response. The status of the deflection may then be sent to user B 103. If the deflection was unsuccessful, then user B 103 may send a different number to the softswitch 102 for deflecting the call. User B 103 may retry multiple times for deflecting the call.

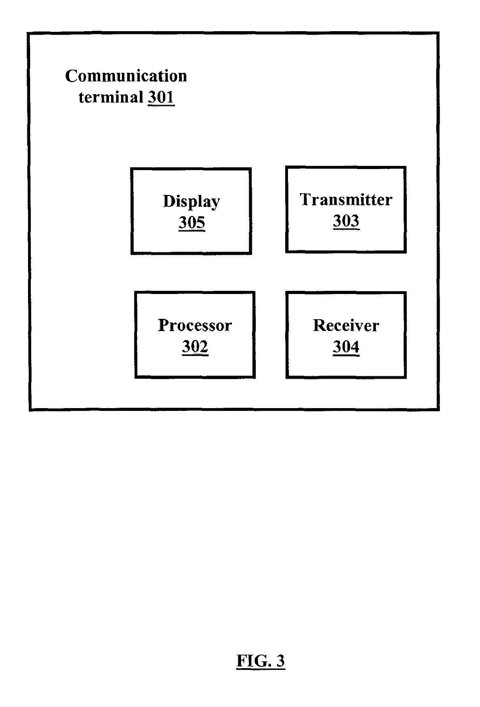

FIG. 3 illustrates a block diagram of a communication terminal. A communication terminal helps users communicate with each other. For example, users may use a mobile phone or any VoIP enabled handset as the communication terminal 301 to communicate with each other. When user A 101 wants to communicate with user B 103, user A 101 sends a call request to user B 103 through the softswitch 102, using the communication terminal 301. A receiver 304 processes the received request. If a communication session is in progress, the receiver 304 receives the data. If the data was encoded or modulated before it was sent, then the receiver 304 decodes or demodulates the received data. For example, data may be modulated through Frequency Shift Keying or Amplitude Shift Keying or the data may be encoded using Non-Return-to-Zero encoding. The decoded or demodulated information may be displayed to the user of the communication terminal 301 using a display 305. User B 103 responds to the call request using the communication terminal 301. If user B 103 wants to deflect the call, then user B would also send the number, to which the call is deflected, in the response. A transmitter 303 is used to send the response to the softswitch 102. If a communication session is in progress, the transmitter 303 transmits the data. If the data has to be encoded or modulated before it is sent, then the transmitter 303 encodes or modulates the data before being transmitted. Also, a request for setting a communication session between users is also sent by the transmitter 303. A processor 302 controls the functioning of the communication terminal 301. The processor 302 controls the functioning of the transmitter 303, receiver 304 and the display 305. When a request for a call is received, the processor 302 displays the options to accept, reject or deflect the call in the display 305 to alert user B 103 of the call request. User B 103 may then choose to accept, reject or deflect the call. If the user B 103 wants to communicate with user A 101, then user B 103 can choose the accept option. If user B 103 does not want to communicate with user A 101, then user B 103 can choose the reject option. If user B 103 wants to deflect the call, user B 103 can choose the deflect option. Without disconnecting the call, user B 103 can deflect the call and dynamically enter the number to which the call is to be deflected using the communication terminal 301. The processor 302 includes the number in the response to the request. The transmitter 303 then sends the response to user A 101 through the softswitch 102.

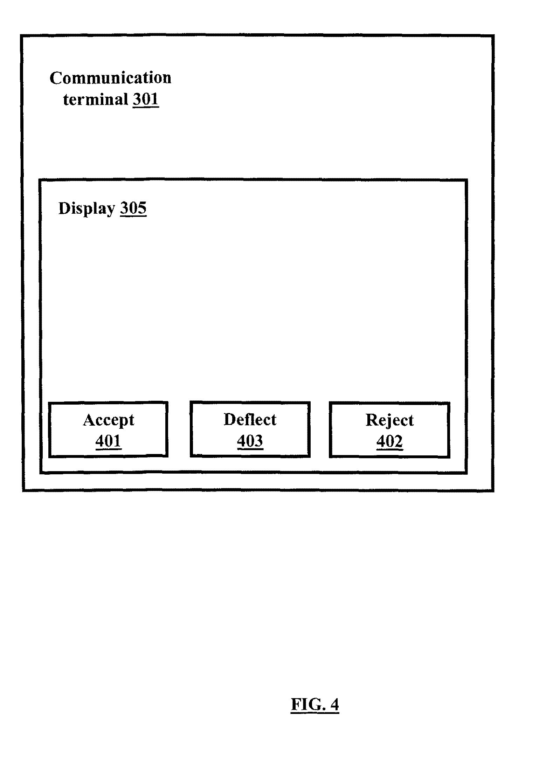

FIG. 4 illustrates a block diagram of a communication terminal displaying the option to deflect a call. The communication terminal 301 helps users communicate with each other. When user A 101 wants to communicate with user B 103, user A 101 sends a call request to user B 103 through the softswitch 102, using the communication terminal 301. User B 103 responds to the call request using the communication terminal 301. User B 103 may then choose to accept, reject or deflect the call. If the user B 103 wants to communicate with user A 101, then user B 103 can choose the accept 401 option. If user B 103 does not want to communicate with user A 101, then user B 103 can choose the reject 402 option. If user B 103 wants to deflect the call, user B 103 can choose the deflect 403 option. If user B 103 wants to deflect the call, then user B would also send the number, to which the call is deflected, in the response sent to user A 101.

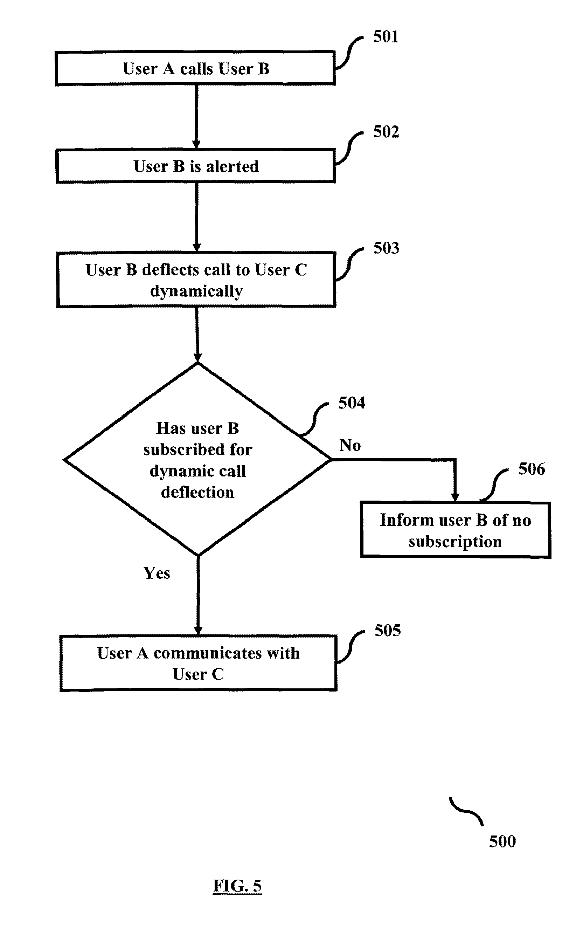

FIG. 5 is a flowchart depicting a method for deflecting calls dynamically. When user A 101 wants to communicate with user B 103, user A 101 sends (501) a call request to user B 103 through the softswitch 102, using the communication terminal 301. The softswitch 102 sends (502) an alert to user B 103 to inform user B of the call request. The options to accept, reject or deflect the call is displayed in user B's 103 communication terminal 301. User B 103 responds to the call request using the communication terminal 301. If user B 103 cannot answer the call, then user B 103 can choose to deflect the call dynamically by selecting the deflect option. If user B 103 deflects (503) the call, then user B also enters the number to which the call is deflected, during the alert phase of the call. If the call is deflected to user C 104, then user C's 104 number is entered by user B 103. The number would be sent to the softswitch 102 in the response sent by user B 103. When the softswitch receives the response, the softswitch 102 checks (504) to determine if user B 103 has subscribed for the service of deflecting calls dynamically during the alert phase of the call. If the softswitch 102 determines that user B 103 has not subscribed for the service, then the softswitch 102 sends (506) a message to user B 103 indicating that user B 103 has not subscribed for the service. If the softswitch 102 determines that user B 103 has subscribed for the service, then the softswitch 102 sends a call request to user C 104. Once user C 104 responds to the call request, a communication path will be established between user A 101 and user C 104. User A 101 and user C 104 would then be able to communicate (505) with each other. The various actions in method 500 may be performed in the order presented, in a different order or simultaneously. Further, in some embodiments, some actions listed in FIG. 5 may be omitted.

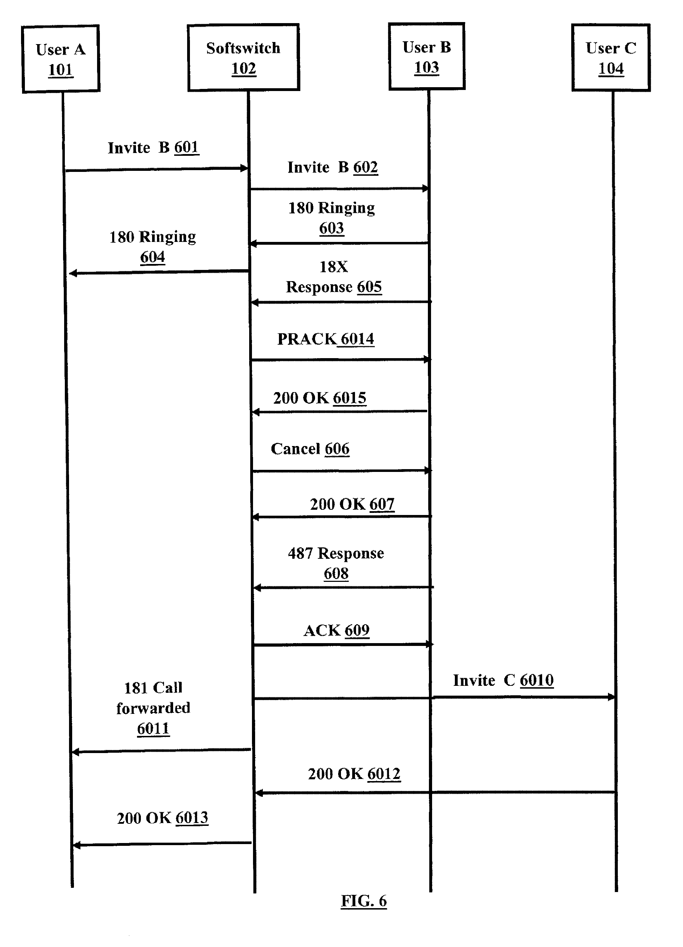

FIG. 6 illustrates a flow diagram of dynamic call deflection using early release of the session between network and first communication terminal before invoking call deflection by softswitch. When user A 101 wants to communicate with user B 103, user A 101 sends a call request to user B 103 through the softswitch 102, using the communication terminal 301. For example, the call request sent to softswitch 102 may be sent as an Invite B 601 message. On receiving the call request, the softswitch 102 establishes a communication path to user B 103 and sends the call request to user B 103. For example, the call request sent to user B 103 may be sent as an Invite B 602 message. User B 103 is alerted of the call request by the softswitch 102. The alert may be in the form of ringing at user B's 103 communication terminal 301. Also, the options to accept, reject or deflect the call is displayed in user B's 103 communication terminal 301. A message is sent from user B's 103 communication terminal 301 to the softswitch 102 to indicate the ringing. For example, the message may be sent as a 180 ringing 603 message. The softswitch 102 sends the message to user A 101. For example, the message may be sent as a 180 ringing 604 message. On receiving the call request, user B 103 may choose to respond to the call request using the communication terminal 301. If user B 103 cannot answer the call, then user B 103 can choose to deflect the call dynamically by selecting the deflect option. If user B 103 deflects the call, then user B also enters the number to which the call is deflected, during the alert phase of the call. If the call is deflected to user C 104, then user C's 104 number is entered by user B 103. The number would be sent to the softswitch 102 in the response sent by user B 103. For example, the response sent to the softswitch 102 may be an 18X response 605 or more specifically any unused provisional 18x response, such as 188 response, and user C's number may be included in a new header in the 18X response 605. When the softswitch receives the response, the softswitch 102 checks to determine if user B 103 has subscribed for the service of deflecting calls dynamically during the alert phase of the call. If the softswitch 102 determines that user B 103 has not subscribed for the service, then the softswitch 102 sends a message to user B 103 indicating that user B 103 has not subscribed for the service. For example, the message may be sent using a reliability message PRACK 6014. On receiving the message user B acknowledges the reception by sending an acknowledgement to the softswitch 102. For example, the acknowledgement message sent by user B 103 to the softswitch 102 may be a 200 OK 6015 message. If the softswitch 102 determines that user B 103 has subscribed for the service, then the softswitch 102 processes the response and determines that user B 103 has decided to deflect the call. The softswitch 102 extracts user C's 104 number from the response. The softswitch 102 then sends a message to user B 103 to cancel the request for the call. On receiving the request for cancellation, user B 103 sends a response indicating successful cancellation request. For example, the cancellation request may be sent as a Cancel 606 request and the response may be sent as a 200 OK 607 message. After sending the response, user B 102 sends a message to the softswitch 102 indicating that the call request has been terminated. On receiving the message the softswitch 102 sends an acknowledgement indicating the reception of the message. For example, a 487 response 608 message may be sent to indicate that the request has been terminated and an ACK 609 message may be sent to acknowledge the reception of the 487 response 608. After the call request to user B 102 has been terminated, the softswitch 102 sends a message to user C 103, inviting user C 103 to the communication session. The softswitch also sends a message to user A 101 indicating that the call has been deflected. For example, the invitation to user C 103 may be sent as an Invite C 6010 and the message sent to user A 101 indicating call deflection, may be sent as a 181 call forwarded 6011 message. If user C 104 answers the call, then user C 104 sends a positive response to the softswitch 102 and the softswitch conveys the positive response to user A 101. For example, the positive response sent by user C 104 may be as a 200 OK 6012 message and the message sent by the softswitch 102 to user A 101 may be a 200 OK 6013 message. Once user C 104 answers the call, a communication session would be established between user A 101 and user C 104 enabling the two users to communicate with each other. The softswitch 102 then maintains the call context for the communication session.

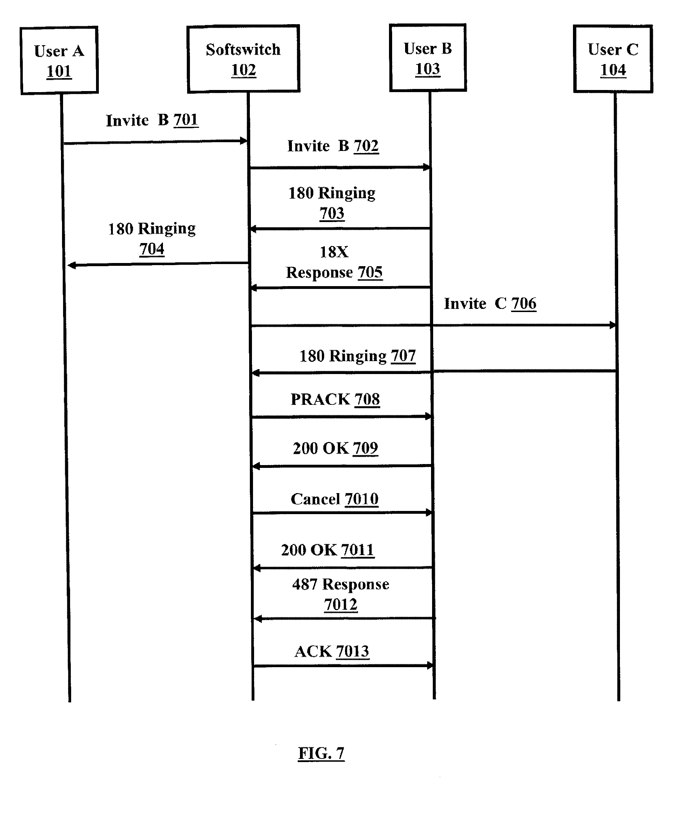

FIG. 7 illustrates a flow diagram of dynamic call deflection using late release of the existing session between network and first communication terminal after call deflection has been successful. When user A 101 wants to communicate with user B 103, user A 101 sends a call request to user B 103 through the softswitch 102, using the communication terminal 301. For example, the call request sent to softswitch 102 may be sent as an Invite B 701 message. On receiving the call request, the softswitch 102 establishes a communication path to user B 103 and sends the call request to user B 103. For example, the call request sent to user B 103 may be sent as an Invite B 702 message. User B 103 is alerted of the call request by the softswitch 102. The alert may be in the form of ringing at user B's 103 communication terminal 301. Also, the options to accept, reject or deflect the call is displayed in user B's 103 communication terminal 301. A message is sent from user B's 103 communication terminal 301 to the softswitch 102 to indicate the ringing. For example, the message may be sent as a 180 ringing 703 message. The softswitch 102 sends the message to user A 101. For example, the message may be sent as a 180 ringing 704 message. On receiving the call request, user B 103 may choose to respond to the call request using the communication terminal 301. If user B 103 cannot answer the call, then user B 103 can choose to deflect the call dynamically by selecting the deflect option. If user B 103 deflects the call, then user B 103 also enters the number to which the call is deflected, during the alert phase of the call. If the call is deflected to user C 104, then user C's 104 number is entered by user B 103. The number would be sent to the softswitch 102 in the response sent by user B 103. If user B wants to know the status of the deflected call, then user B 103 can request to be informed of the deflection status by invoking a request for a reliable provisional response. The request for reliable provisional response is included in the header of the response sent to the softswitch 102. For example, the response sent to the softswitch 102 may be a provisional 18X response 705, such as a 188 response, and user C's 104 number may be included in a new header in the 18X response 705. User B's 103 request for the reliable provisional response may be invoked by appending a 100rel tag in the header of the 18X response 705. When the softswitch receives the response, the softswitch 102 checks (504) to determine if user B 103 has subscribed for the service of deflecting calls dynamically during the alert phase of the call. If the softswitch 102 determines that user B 103 has not subscribed for the service, then the softswitch 102 sends a message to user B 103 indicating that user B 103 has not subscribed for the service. For example, the message may be sent using a reliability message PRACK. If the softswitch 102 determines that user B 103 has subscribed for the service, then the softswitch 102 processes the response and determines that user B 103 has decided to deflect the call. The softswitch 102 extracts user C's 104 number from the response. The softswitch 102 then sends a message to user C 103, inviting user C 103 to the communication session. For example, the invitation message sent to user C 104 may be sent as an Invite C 706 message. User C 104 is alerted of the call request by the softswitch 102 and the alert may be in the form of ringing at user C's 104 communication terminal 301. A message is sent from user C's 104 communication terminal 301 to the softswitch 102 to indicate the ringing. For example, the message may be sent as a 180 ringing 707 message.

If the deflection is successful, the softswitch 102 sends a message to user B 103 indicating the success of the deflection. For example, the successful deflection may be conveyed to user B 103 using a PRACK 708 message and the reliable provisional response allows the softswitch 102 update the status of the deflection in the PRACK 708 message. On receiving the status of the deflection, user B 103 sends a response to the softswitch 102 indicating the successful reception of the status message. For example, the response sent by user B 103 to the softswitch 102 may be a 200 OK 709 message. The softswitch 102 then sends a message to user B 103 to cancel the request for the call. On receiving the request for cancellation, user B 103 sends a response indicating successful cancellation request. For example, the cancellation request may be sent as a Cancel 7010 request and the response may be sent as a 200 OK 7011 message. After sending the response, user B 102 sends a message to the softswitch 102 indicating that the call request has been terminated. On receiving the message the softswitch 102 sends an acknowledgement indicating the reception of the message. For example, a 487 response 7012 message may be sent to indicate that the request has been terminated and an ACK 7013 message may be sent to acknowledge the reception of the 487 response 7012. The call context started for the communication session between user A 101 and user B 103 would then be cleared.

If user C 103 answers the call and the deflection has been successful, then a communication session would be established between user A 101 and user C 103 enabling the two users to communicate with each other. The softswitch 102 then maintains the call context for the communication session.

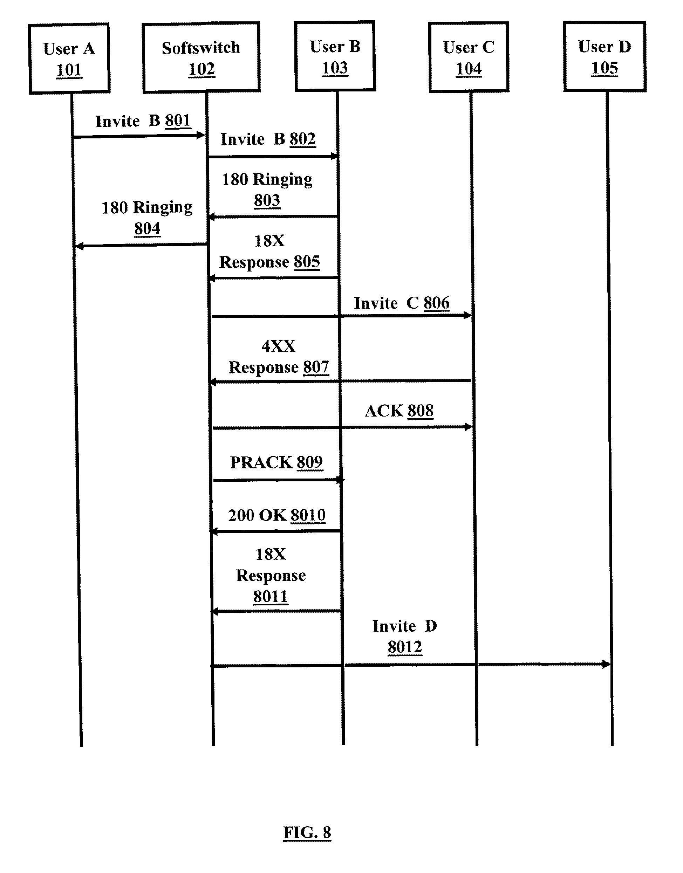

FIG. 8 illustrates a flow diagram of dynamic call deflection using late release of the existing session between network and first communication terminal, with retry option and call deflection has been unsuccessful. When user A 101 wants to communicate with user B 103, user A 101 sends a call request to user B 103 through the softswitch 102, using the communication terminal 301. For example, the call request sent to softswitch 102 may be sent as an Invite B 801 message. On receiving the call request, the softswitch 102 establishes a communication path to user B 103 and sends the call request to user B 103. For example, the call request sent to user B 103 may be sent as an Invite B 802 message. User B 103 is alerted of the call request by the softswitch 102. The alert may be in the form of ringing at user B's 103 communication terminal 301. Also, the options to accept, reject or deflect the call is displayed in user B's 103 communication terminal 301. A message is sent from user B's 103 communication terminal 301 to the softswitch 102 to indicate the ringing. For example, the message may be sent as a 180 ringing 803 message. The softswitch 102 sends the message to user A 101. For example, the message may be sent as a 180 ringing 804 message. On receiving the call request, user B 103 may choose to respond to the call request using the communication terminal 301. If user B 103 cannot answer the call, then user B 103 can choose to deflect the call dynamically by selecting the deflect option. If user B 103 deflects the call, then user B 103 also enters the number to which the call is deflected, during the alert phase of the call. If the call is deflected to user C 104, then user C's 104 number is entered by user B 103. The number would be sent to the softswitch 102 in the response sent by user B 103. If user B wants to know the status of the deflected call, then user B 103 can request to be informed of the deflection status by invoking a request for a reliable provisional response. The request for reliable provisional response is included in the header of the response sent to the softswitch 102. For example, the response sent to the softswitch 102 may be an new 18X response 805, such as a 188 response, and user C's 104 number may be included in a header in the 18X response 805. User B's 103 request for the reliable provisional response may be invoked by appending a 100rel tag in the header of the 18X response 805. When the softswitch receives the response, the softswitch 102 checks (504) to determine if user B 103 has subscribed for the service of deflecting calls dynamically during the alert phase of the call. If the softswitch 102 determines that user B 103 has not subscribed for the service, then the softswitch 102 sends a message to user B 103 indicating that user B 103 has not subscribed for the service. If the softswitch 102 determines that user B 103 has subscribed for the service, then the softswitch 102 processes the response and determines that user B 103 has decided to deflect the call. The softswitch 102 extracts user C's 104 number from the response. The softswitch 102 then sends a message to user C 103, inviting user C 103 to the communication session. For example, the invitation message sent to user C 104 may be sent as an Invite C 806 message. User C 104 is alerted of the call request by the softswitch 102 and the alert may be in the form of ringing at user C's 104 communication terminal 301. If user C 103 rejects the call or if the deflection is unsuccessful, then user C 103 sends a response to the softswitch 102 indicating the rejection. For example, the response indicating the rejection or failure of the deflection may be sent as a 4XX response 807. On receiving the response, the softswitch acknowledges the response by sending an acknowledgement to user C 104. For example, the acknowledgement sent to user C 104 may be the ACK 808.

The softswitch 102 sends a message to user B 103 indicating the failure of the deflection. The message also indicates the reason for the failure. For example, the unsuccessful deflection may be conveyed to user B 103 using a PRACK 809 message and the reliable provisional response allows the softswitch 102 update the status of the deflection in the PRACK 809 message. On receiving the status of the deflection, user B 103 sends a response to the softswitch 102 indicating the successful reception of the status message. For example, the response sent by user B 103 to the softswitch 102 may be a 200 OK 8010 message. User B 103 can then retry for deflecting the call to user D 105 by entering user B's 103 number, during the alert phase of the call. The number would be sent to the softswitch 102 in the response sent to the softswitch 102 by user B 103. For example, the response sent to the softswitch 102 may be an 18X response 8011, such as a 188 response, and user D's 105 number may be included in a header in the 18X response 8011. If user D 105 answers the call and the deflection has been successful, then a communication session would be established between user A 101 and user D 105 enabling the two users to communicate with each other. The softswitch 102 then maintains the call context for the communication session. The communication path between the softswitch 102 and user B 103 is then terminated. If the call deflection was unsuccessful, then user B 103 can retry multiple times to ensure successful deflection.

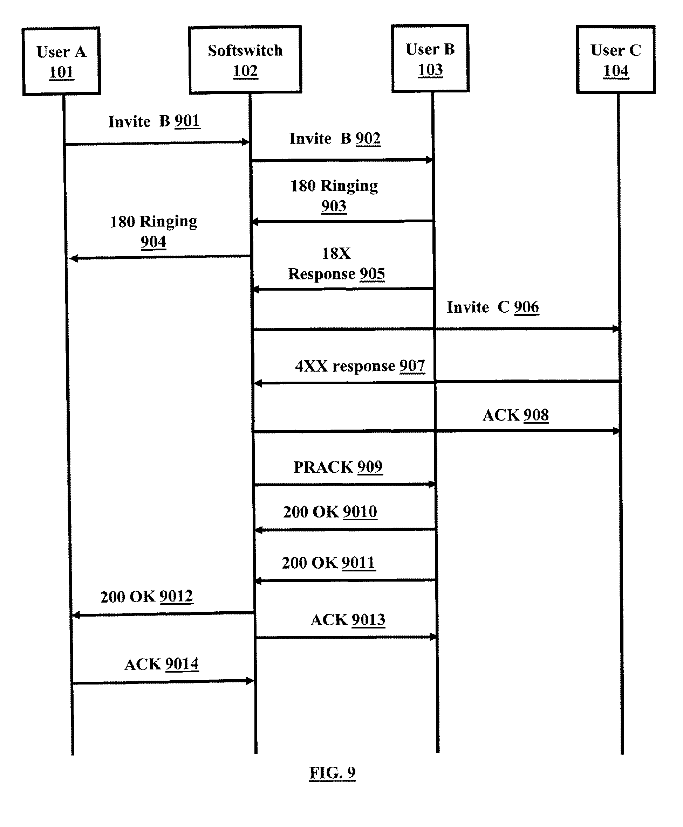

FIG. 9 illustrates a flow diagram of dynamic call deflection with answer option after unsuccessful call deflection. When user A 101 wants to communicate with user B 103, user A 101 sends a call request to user B 103 through the softswitch 102, using the communication terminal 301. For example, the call request sent to softswitch 102 may be sent as an Invite B 901 message. On receiving the call request, the softswitch 102 establishes a communication path to user B 103 and sends the call request to user B 103. For example, the call request sent to user B 103 may be sent as an Invite B 902 message. User B 103 is alerted of the call request by the softswitch 102. The alert may be in the form of ringing at user B's 103 communication terminal 301. Also, the options to accept, reject or deflect the call is displayed in user B's 103 communication terminal 301. A message is sent from user B's 103 communication terminal 301 to the softswitch 102 to indicate the ringing. For example, the message may be sent as a 180 ringing 903 message. The softswitch 102 sends the message to user A 101. For example, the message may be sent as a 180 ringing 904 message. On receiving the call request, user B 103 may choose to respond to the call request using the communication terminal 301. If user B 103 cannot answer the call, then user B 103 can choose to deflect the call dynamically by selecting the deflect option. If user B 103 deflects the call, then user B 103 also enters the number to which the call is deflected, during the alert phase of the call. If the call is deflected to user C 104, then user C's 104 number is entered by user B 103. The number would be sent to the softswitch 102 in the response sent by user B 103. If user B wants to know the status of the deflected call, then user B 103 can request to be informed of the deflection status by invoking a request for a reliable provisional response. The request for reliable provisional response is included in the header of the response sent to the softswitch 102. For example, the response sent to the softswitch 102 may be an new 18X response 905, such as a 188 response, and user C's 104 number may be included in a header in the 18X response 905. User B's 103 request for the reliable provisional response may be invoked by appending a 100rel tag in the header of the 18X response 905. When the softswitch receives the response, the softswitch 102 checks to determine if user B 103 has subscribed for the service of deflecting calls dynamically during the alert phase of the call. If the softswitch 102 determines that user B 103 has not subscribed for the service, then the softswitch 102 sends a message to user B 103 indicating that user B 103 has not subscribed for the service. If the softswitch 102 determines that user B 103 has subscribed for the service, then the softswitch 102 processes the response and determines that user B 103 has decided to deflect the call. The softswitch 102 extracts user C's 104 number from the response. The softswitch 102 then sends a message to user C 103, inviting user C 103 to the communication session. For example, the invitation message sent to user C 104 may be sent as an Invite C 906 message. User C 104 is alerted of the call request by the softswitch 102 and the alert may be in the form of ringing at user C's 104 communication terminal 301. If user C 103 rejects the call or if the deflection is unsuccessful, then user C 103 sends a response to the softswitch 102 indicating the rejection. For example, the response indicating the rejection or failure of the deflection may be sent as a 4XX response 907. On receiving the response, the softswitch acknowledges the response by sending an acknowledgement to user C 104. For example, the acknowledgement sent to user C 104 may be the ACK 908.

The softswitch 102 sends a message to user B 103 indicating the failure of the deflection. The message also indicates the reason for the failure. For example, the unsuccessful deflection may be conveyed to user B 103 using a PRACK 909 message and the reliable provisional response allows the softswitch 102 update the status of the deflection in the PRACK 909 message. On receiving the status of the deflection, user B 103 sends a response to the softswitch 102 indicating the successful reception of the status message. For example, the response sent by user B 103 to the softswitch 102 may be a 200 OK 9010 message. User B 103 can then choose to answer the call since the deflection was unsuccessful. User B 103 sends a positive response to the initial call request sent by user A 101. On receiving the positive response, the softswitch 102 sends the response to user A 101. For example, the response sent by user B 103 to the softswitch 102 may be sent as a 200 OK 9011 message and the response sent by the softswitch 102 to user A 101 may be sent as a 200 OK 9012 message. The softswitch acknowledges the reception of the positive response from user B 102 by sending an acknowledgement to user B 103. User A 101 also acknowledges the reception of the response from the softswitch 102. For example, the acknowledgement sent by the softswitch 102 to user B 103 may be sent as an ACK 9013 message and the acknowledgement sent by user A 101 to the softswitch 102 may be sent as an ACK 9014 message. After acknowledgements have been sent, a communication session would be established between user A 101 and user B 102 enabling the two users to communicate with each other. The softswitch 102 then maintains the call context for the communication session.

The embodiments disclosed herein can be implemented through at least one software program running on at least one hardware device and performing network management functions to control the network elements. The network elements shown in Fig. 1 include blocks which can be at least one of a hardware device, or a combination of hardware device and software module.

The embodiment disclosed herein specifies a method and system for deflecting calls dynamically. The mechanism allows the user to dynamically enter the number to which the call is to be deflected providing a system thereof. Therefore, it is understood that the scope of the protection is extended to such a program and in addition to a computer readable means having a message therein, such computer readable storage means contain program code means for implementation of one or more steps of the method, when the program runs on a server or mobile device or any suitable programmable device. The method is implemented in a preferred embodiment through or together with a software program written in e.g. Very high speed integrated circuit Hardware Description Language (VHDL) another programming language, or implemented by one or more VHDL or several software modules being executed on at least one hardware device. The hardware device can be any kind of device which can be programmed including e.g. any kind of computer like a server or a personal computer, or the like, or any combination thereof, e.g. one processor and two FPGAs. The device may also include means which could be e.g. hardware means like e.g. an ASIC, or a combination of hardware and software means, or at least one microprocessor and at least one memory with software modules located therein. Thus, the means are at least one hardware means or at least a combination of one hardware means and one software means. The method embodiments described herein could be implemented in pure hardware or partly in hardware and partly in software. Alternatively, the invention may be implemented on different hardware devices, e.g. using a plurality of CPUs.

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of preferred embodiments, those skilled in the art will recognize that the embodiments herein can be practiced with modification within the spirit and scope of the claims as described herein.

## Claims

1. A method for a called user to deflect a call from a calling user to a second communication terminal dynamically in Session Initiation Protocol (SIP) networks, said method comprising steps of
said called user entering number of said second communication terminal using a first communication terminal during alert phase of said call;
said first communication terminal sending said number to network of said called user; and
said network initiating a second session to said second communication terminal.

2. The method, as claimed in claim 1, wherein a session established between said network and said first communication terminal is released, and then said second session is established between said network and said second communication terminal.

3. The method, as claimed in claim 1, wherein said second session is established between said network and said second communication terminal, and then session established between said network and said first communication terminal is released.

4. The method, as claimed in claim 1, wherein said network sends status of said deflected call to said called user, wherein said status indicates if said dynamic deflection is successful or a failure.

5. The method, as claimed in claim 3, wherein said called user can try deflecting said call to a different number if said deflection failed, wherein said called user can retry multiple times to deflect said call.

6. The method, as claimed in claim 3, wherein said called user can answer said call if said deflection failed.

7. The method, as claimed in claim 1, wherein said called user subscribes to said service of deflecting calls dynamically during alert phase of said call.

8. The method, as claimed in claim 1, wherein said network checks to determine if said called user has subscribed to said service of deflecting calls dynamically during alert phase of said call before deflecting said call.

9. A communication terminal for deflecting a call from a calling user to a second communication terminal dynamically in Session Initiation Protocol (SIP) networks, said communication terminal comprising atleast one means adapted for
enabling a called user to enter number of said second communication terminal during alert phase of said call; and
sending a response to a network, wherein said number of said second communication terminal is included in said response.

10. The communication terminal, as claimed in claim 9, wherein said communication terminal is adapted to
receive a message indicating the status of said deflected call, wherein said status indicates if said dynamic deflection is successful or a failure;
try atleast once to deflect the call to a different number if said deflection failed; and answer the call if said deflection failed.

11. A network for enabling a called user to deflect a call from a calling user to a second communication terminal in Session Initiation Protocol (SIP) networks, said network comprising atleast one means adapted for
enabling said called user to enter number of said second communication terminal using a first communication terminal during alert phase of said call;
receiving a response from said called user, wherein said response indicates that said call is to be deflected and said number of said second communication terminal is included in said response; and
said network initiating a second session to said second communication terminal.

12. The network, as claimed in claim 11, wherein said network is adapted to release session established between said network and said first communication terminal and then said second session is established between said network and said second communication terminal.

13. The network, as claimed in claim 11, wherein said network is adapted to establish said second session between said network and said second communication terminal and then session established between said network and said first communication terminal is released.

14. The network, as claimed in claim 11, wherein said network is adapted to
send the status of said deflected call to said called user, wherein said status indicates if said deflection is a success or a failure;
receive multiple said responses if said status indicates that said deflection was a failure; and
receive a answer response from said called user if said status indicates that said deflection was a failure.
